# EUROPÄISCHE PATENTANMELDUNG

(11) **EP 2 315 064 A1**
(43) Veröffentlichungstag der Anmeldung: **27.04.2011**
(21) Anmeldenummer: 10013805.6
(22) Anmeldetag: 20.10.2010
(51) Int. Cl.: G02B 17/06, F41G 7/22

(54) **Optische Einrichtung für ein Visier**

(30) Priorität: 21.10.2009 DE 102009050163
(71) Anmelder: LFK-Lenkflugkörpersysteme GmbH, 86529 Schrobenhausen (DE)
(72) Erfinder: Barth, Jochen, 85764 Oberschleißheim (DE); Blechinger, Fritz, 86859 Holzhaus-Igling (DE)

(57) **Zusammenfassung**

Die Erfindung betrifft eine optische Anordnung für multispektrale Bilderfassung und multispektrale Bildprojektion in einem Visier unter Verwendung eines Schiefspieglers als achromatisches Objektiv.

## Beschreibung

Die Erfindung betrifft eine optische Einrichtung für ein Visier, welches mehrere optische Geräte wie beispielsweise optische Sensoren und einen Richtmarkenprojektor mit einem eigenen Objektiv umfasst, wobei deren optische Achsen mittels Strahlteilern und / oder Combinern in einen gemeinsamen Strahlengang zum Objektiv des Visiers eingespiegelt werden oder wobei die optische Achse mit dem Strahlengang zusammenfällt.

Zur Steuerung von Lenkflugkörpern vom Abschuss bis ins Ziel werden Visiere verwendet. Zu diesem Zweck weist ein Visier neben einem optischen Sensor, wie beispielsweise einem Fernrohr, einen Sensor zur Erfassung der jeweiligen Position des Flugkörpers auf. darüber hinaus ist üblicherweise im Visier auch ein Wärmebildgerät vorgesehen, mit dessen Hilfe ein Schütze das Ziel auch bei Dunkelheit und ohne Verwendung einer Beleuchtung anvisieren kann. Weiterhin kann im Visier auch eine TV-Kamera angeordnet sein.

Aus der DE 34 28 990 A1 ist eine Vorrichtung zur Harmonisierung der optischen Achsen eines Visiers bekannt geworden. Bei dieser Anordnung wird eine einzige Richtmarke in der Form eines Fadenkreuzes in allen Sensoren eingespiegelt, so dass ohne weitere Justage der Sensoren das Fadenkreuz in allen Sensoren exakt auf dem gleichen Punkt in der Szene liegt. Es ist in dieser Druckschrift jedoch kein Hinweis darauf gegeben, welche Ansprüche an ein Objektiv zu stellen sind, welches das Szenenbild auf die Sensoren des Visiers abbildet.

In der US 4 085 910 A wird ein Mulimode-Suchkopf für einen Lenkflugkörper beschrieben, bei dem zwei Detektoren über unterschiedlichen Strahlengänge angesteuert werden.

Die DE 20 2007 010 552 U1 befasst sich mit einem Visier, welches mehrere optische Geräte umfasst, deren optische Achsen grundsätzlich parallel zueinander ausgerichtet sind. Die von einem Richtmarkenprojektor erzeugte Richtmarke wird hierbei mittels eines Combiners in den von der Szene zu den optischen Geräten führenden Strahlengang eingespiegelt. Das Visier weist ein Objektiv auf, das jedoch nicht näher beschrieben ist.

Eine Cassegrain-Optik für einen Suchkopf wird in der DE 34 23 792 C1 vorgeschlagen. Die Verwendung einer derartigen gemeinsamen Optik für mehrere Sensoren bietet einerseits den Vorteil weniger notwendiger Komponenten und einfacher Justierung. Gleichzeitig nimmt man jedoch den Nachteil der Mittenabschattung der Pupille durch den Fangspiegel des Objektivs in Kauf. Dies führt zu Beugungseffekten und begrenzt das erreichbare Auflösungsvermögen. Sensoren, die im visuellen Spektralbereich oder im nahen Infrarot arbeiten, sind wegen der kurzen Wellenlängen nicht entscheidend betroffen. Im langwelligen Infrarot hingegen führt dies zu erheblichen Einschränkungen und verbietet insbesondere den Einsatz ungekühlter Detektoren. Diese Detektoren benötigen Optiken mit kleiner F-Zahl (1 bis 2), um ähnliche Temperaturempfindlichkeiten wie die Quadrantendetektoren zu erreichen. Bei unabgeschatteter Pupille bedeutet dies einer Beugungsgrenze von etwa <40µm. Wird die Beugungsgrenze durch eine Mittenabschattung vergrößert, muss auch die F-Zahl der Optik entsprechend erhöht werden, um wieder eine optimale Anpassung an den Detektor zu erhalten. Dies macht jedoch den Aufbau teurer, größer und schwerer.

Der Erfindung liegt deshalb die Aufgabe zugrunde, eine optische Anordnung für den multispektralen Bildsensor eines Visiers der eingangs beschriebenen Art anzugeben, durch die in mehreren räumlich getrennten Bildebenen Abbildungen der erfassten Szene in den unterschiedlichen Spektralbereichen erzeugt werden, deren Qualität den unterschiedlichen Erfordernissen kommerzieller Detektoren für den jeweiligen Spektralbereich angepasst ist. Dabei soll sich die optische Anordnung insbesondere durch Kompaktheit, geringes Gewicht und durch Stabilität der Achsharmonisierung der Sensorbilder untereinander gegenüber thermischen und mechanischen Umwelteinflüssen auszeichnen.

Die Aufgabe wird mittels der Erfindung dadurch gelöst, dass das Objektiv als Schiefspiegler mit homogen flächigen und zueinander gekippten Spiegeln und mit einem Z-förmigem Strahlengang ausgeführt ist, dessen Eingangs- und Ausgangs-Strahlengänge etwa parallel zueinander verlaufen. Anschließend an das Objektiv erfolgt im Visier die Aufteilung der Strahlengänge mittels dichroitischer Spiegel in verschiedene Kanäle.

Somit wird in vorteilhafter Weise in konstruktiv einfaches Objektiv mit großer spektraler Bandbreite für alle vorhandenen Sensoren genutzt. Eine Mittenabschattung wie bei einem Cassegrainobjektiv findet nicht statt. Das Objektiv beeinflusst nicht negativ die Achsharmonisierung der Sensoren. Das Objektiv ermöglicht die Projektion einfacher Strukturen wie beispielsweise Achsmarken mit großer spektraler Bandbreite, dies mit nur einer einzigen Pupille und mit Bezug auf eine einzige optische Achse. darüber hinaus zeichnet sich diese optische Einrichtung durch kompakte Bauweise und hohe mechanische Stabilität im Betrieb aus.

Es bietet sich an, anstelle eines Sensors oder zusätzlich zu den vorhandenen Sensoren eine Auskoppelung für ein Okular für einen Nutzer anzuordnen. In dessen Strahlengang kann in vorteilhafter Weise auch das Bild eines anderen optischen Sensors wie beispielsweise ein Wärmebild eingespiegelt werden.

Bedarfsweise kann das Schiefspiegler-Objektiv auch für fünffache Reflexion ausgelegt werden. In vorteilhafter Weise weist auch der im Visier verwendete Richtmarkenprojektor ein Schiefspiegler-Objektiv auf, dessen Ausgangsstrahlengang über einen Combiner in den Strahlengang des Visiers zu den Sensoren eingespiegelt wird.

Ein Ausführungsbeispiel der Erfindung ist schematisch vereinfacht in der Zeichnung dargestellt und wird im Folgenden näher beschrieben. Es zeigen:
- Fig. 1:: ein Visier mit einem Schiefspiegler-Objektiv,
- Fig. 2:: ein Visier mit Schiefspiegler-Objektiv und Fünffachreflexion,
- Fig. 3:: ein Visier mit einem Richtmarkenprojektor.

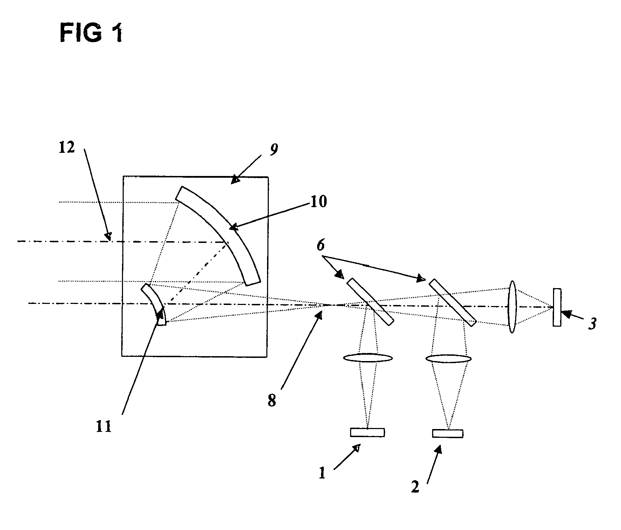

Gemäß der Erfindung nimmt in Figur 1 ein nicht abschattendes Schiefspiegler-Objektiv 9 über den externen Strahlengang 12 die Strahlung aus einer entfernt liegenden Szene spektral breitbandig auf und bildet sie auf einer Bildebene des in der Figur dargestellten Visiers ab. Das Objektiv weist zwei zueinander geneigt angeordnete Spiegel 10 und 11 auf, über die das Szenenbild über den internen Strahlengang 8 innerhalb des Visiers letztlich zu den Detektoren 1, 2, 3 geleitet wird. Dies erfolgt über spektrale Strahlteilerspiegel 6 auf die Sensoren 1 und 2 oder direkt auf den Sensor 3. Über eine für jeden Kanal individuell ausgelegte Relay-Optik wird das Bild jeweils so auf den jeweiligen Focal-Plane-Array-Detektor 1, 2, 3 des Kanals abgebildet, dass die Bildgröße der gesamten Detektorfläche und die Punktbildinformationen der Größe der Detektorfläche entsprechen. Erfüllt das von Schiefspiegler-Objektiv direkt entworfene Bild diese Anforderungen bereits für einen zu nutzenden Detektor, so kann die Strahlung des zugehörenden Kanals auch zwischen Objektiv und Bildebene ausgespiegelt und unmittelbar auf den Detektor gelenkt werden.

Die Figur zeigt vereinfacht ein mögliches Ausführungsbeispiel. Hierbei kann der Detektor 1 ein Sensor für den visuellen Bereich sein, bei dem auch auf eine zusätzliche Relay-Optik verzichtet werden kann, so dass der entsprechende Strahlteilerspiegel 6 vor der Bildebene des Schiefspiegler-Objektivs 9 positioniert sein kann.

Der Detektor 2 kann ein Laser-Empfänger sein, der im nahen IR empfindlich ist. Bei einem Empfänger für einen Laserentfernungsmesser kann mit Hilfe der vorgeschalteten Relay-Optik bei gegebener Detektorgröße die gewünschte Winkelauflösung eingestellt werden, mit der die am Ziel reflektierte Laserstrahlung detektiert wird. Soll hingegen die am Ziel reflektierte Strahlung eines Laserzielbeleuchters empfangen werden, so kann die vorgeschaltete Relay-Optik vorteilhaft als Zoomoptik ausgeführt sein um zunächst einen möglichst großen Auffassbereich zu erreichen, während nach erfolgter Auffassung die Positionsauflösung am Detektor durch vergrößernde Abbildung der Bildebene des Schiefspieglers auf den Detektor optimiert wird.

Der Detektor 3 kann schließlich als ungekühlter Mikrobolometer-Detektor ausgeführt sein. Die Bildebene des Schiefspiegler-Objektivs wird von der vorgeschalteten Relay-Optik verkleinert auf die Detektorebene abgebildet, wodurch sich die F-Zahl am Detektor wie gewünscht verringert.

Alle in unterschiedlichen Spektralbereichen erfassten Kanäle können mit einfachen Mittels so aufgebaut sein, dass die erfassten Bilder zueinander achsharmonisiert sind, da die Anordnung von Strahlteilerspiegel und Relay-Optiken räumlich sehr kompakt ist.

Schiefspiegler-Objektive sollen neben ausreichend großen Sehfeldern auch F-Zahlen von etwa 8 besitzen, um unter Berücksichtigung einer möglichen verkleinernden Abbildung durch eine Relay-Optik die gesamte Fläche des eingesetzten Flocal-Plane-Array Detektors mit guter Abbildungsqualität auszuleuchten.

Das Schiefspiegler-Objektiv besteht aus zwei zueinander gekippt angeordneten Spiegeln 10 und 11. Die Nutzung der Spiegel erfolgt bis zu fünf Mal, wobei eine kompakte Bauform dadurch erzielt wird, dass das Licht bei der fünften Reflexion in Richtung des einfallenden Lichts reflektiert wird. Die Bildebene des Schiefspiegler-Objektivs steht senkrecht zur optischen Achse des Strahlengangs 8. Der Strahlenverlauf and der Bildebene ist telezentrisch.

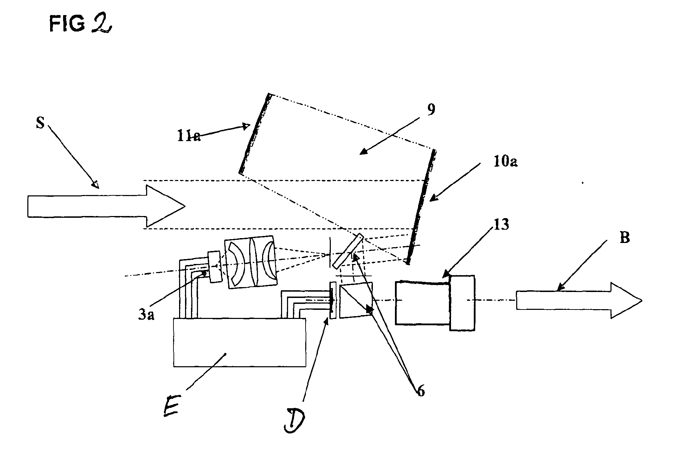

Die Figur 2 zeigt eine spezielle Bauform, bei der der visuelle Kanal nicht mit einem Detektor abgetastet wird, sondern dem Benutzer B nach Art eines Fernglases über ein Okular 13 zur direkten Betrachtung des von der entfernt liegenden Szene S ankommenden Bilds angeboten wird, wobei die der direkten Betrachtung nicht zugängliche Strahlung eines anderen Kanals von einem Detektor 3a erfasst und das mittels einer Elektronik E auf einem Display D wiedergegeben wird. Dieses Bild wird dann über einen Strahlteiler 6 in das Okular 13 eingeblendet.

Die Optiken sind dabei so ausgelegt, dass das Displaybild größengleich zum direkten Bild erscheint. Somit erhält man ein kleines und leichtes Beobachtungsgerät, das wie ein einäugiges Fernglas handhabbar ist und zusätzlich die Informationen eines Wärmebildgeräts liefert. Der in der Figur 2 dargestellte Aufbau ist natürlich um zusätzliche Empfangskanäle erweiterbar.

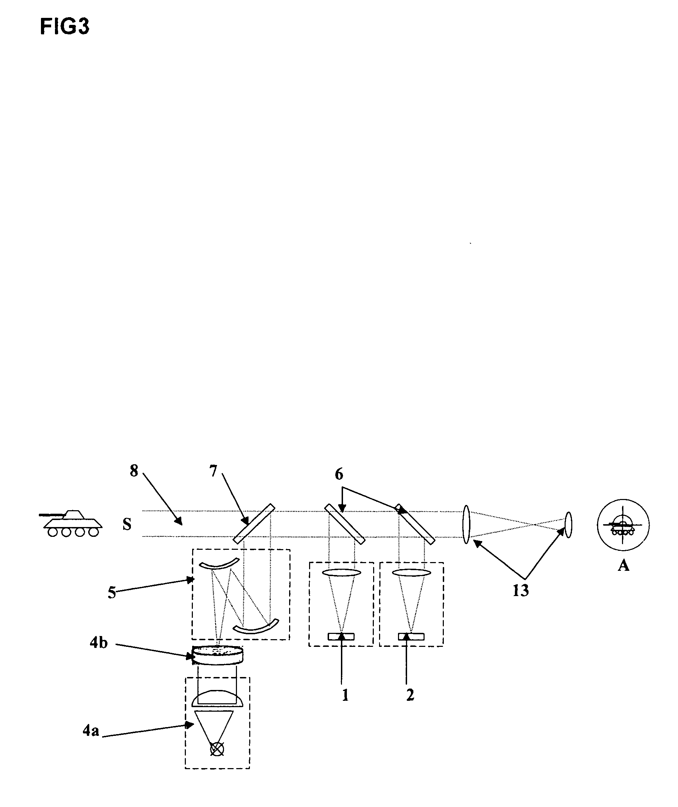

Die Figur 3 zeigt den grundsätzlichen Aufbau eines Visiers wie in Figur 1 dargestellt, jedoch wurde aus Gründen der Übersichtlichkeit auf die Darstellung des Schiefspiegler-Objektivs 9 verzichtet. Neu ist hingegen die Ausführungsform des Richtmarkenprojektors 4a und 4b, bei dem von der Lichtquelle 4a beispielsweise eine Fadenkreuzmaske 4b beleuchtet wird. Das erzeugte Fadenkreuz wird dann mittels eines weiteren Schiefspiegler-Objektivs 5, das als Projektionsobjektiv dient, mit Hilfe eines Combiners 7 in den Strahlengang 8 des Visiers eingespiegelt. Das Fadenkreuz erscheint damit geometrisch passgenau auf der Abbildung der Szene S auf dem für den Betrachter sichtbaren Fernrohrbild A.

## Patentansprüche

1. Optische Einrichtung für ein Visier, welches mehrere optische Geräte wie beispielsweise optische Sensoren (1, 2, 3) und einen Richtmarkenprojektor (4) mit einem eigenen Objektiv (5)umfasst, wobei deren optische Achsen mittels Strahlteilern (6) und / oder Combinern (7) in einen gemeinsamen Strahlengang (8) zum Objektiv (9) des Visiers eingespiegelt werden oder wobei die optische Achse mit dem Strahlengang zusammenfällt, **dadurch gekennzeichnet, dass** das Objektiv (9) als Schiefspiegler mit homogen flächigen und zueinander gekippten Spiegeln (10, 11) und mit Z-förmigem Strahlengang ausgeführt ist, dessen Eingangs- und Ausgangs-Strahlengänge (8, 12) etwa parallel zueinander angeordnet sind.

2. Optische Einrichtung nach Anspruch 1, **dadurch gekennzeichnet, dass** anstelle eines Sensors ein Okular (13) für einen Nutzer angeordnet ist.

3. Optische Einrichtung nach Anspruch 2, **dadurch gekennzeichnet, dass** in den Strahlengang des Okulars (13) das Ausgangssignal (14) eines Sensors (3a) eingespiegelt wird.

4. Optische Einrichtung nach Anspruch 3, **dadurch gekennzeichnet, dass** das Ausgangssignal (14) eines Wärmebildsensors (3a) in den Strahlengang des Okulars (13) eingespiegelt wird.

5. Optische Einrichtung nach Anspruch 1, **dadurch gekennzeichnet, dass** die Spiegel (10a, 11a) für eine fünffache Reflexion ausgelegt sind.

6. Einrichtung nach Anspruch 1, **dadurch gekennzeichnet, dass** der Richtmarkenprojektor (4a, 4b) ein Schiefspiegler-Objektiv (5) aufweist, über das eine beleuchtete Fadenkreuzmaske (4b) mittels eines Combiners (7) in den Strahlengang (8) des Visiers eingespiegelt wird.
